Europäisches Patentamt

European Patent Office

Office européen des brevets

(11) Veröffentlichungsnummer: **0 470 278 A1**

## (12) EUROPÄISCHE PATENTANMELDUNG

(21) Anmeldenummer: **90115186.0**

(22) Anmeldetag: **07.08.90**

(51) Int. Cl.5: **H01S 3/03**

(43) Veröffentlichungstag der Anmeldung:
**12.02.92 Patentblatt 92/07**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Weidlich, Jürgen, Ing.-grad.**
**Fasanenstrasse 150**
**W-8025 Unterhaching(DE)**

(54) **Vakuumdicht verschlossener Gaslaser.**

(57) Eine rationell herstellbare Ausführungsform eines vakuumdicht verschlossenen Gaslasers (1) mit einem Pumpkanal (2) weist die Merkmale auf, daß den Pumpkanal (2) ein Ring (3) aus einem weichlötfähigen Material umschließt, der mit dem Gehäuse mittels eines hochschmnelzenden Lotes verlötet ist und daß der Ring (3) mittels Weichlotes vakuumdicht verschlossen ist.

Der vakuumdicht verschlossene Gaslaser wurde entwickelt für Gaslaser mit Gehäuseteilen aus Metall oder Keramik.

FIG 1

EP 0 470 278 A1

Rank Xerox (UK) Business Services

Die vorliegende Erfindung betrifft einen vakuumdicht verschlossenen Gaslaser gemäß dem Oberbegriff des Patentanspruchs 1. Ein derartiger Laser ist aus dem Siemens Prospekt 1986/87 "Für die He-Ne-Lasertechnik: Röhren, Module, Stromversorgungen" bekannt. Auf Seite 2 dieser Literaturstelle erkennt man auf der rechten Seite von Bild 1 einen sogenannten Pumpstengel, der an einer Metallkappe des Lasers angebracht ist. Auf dem Titelbild desselben Prospektes ist erkennbar, daß dieser Pumpstengel abgequetscht und dadurch vakuumdicht verschlossen ist.

Diese Laser werden einzeln an einen Pumpund Füllstand angeflanscht. Nach Beendigung der Arbeitsgänge Evakuieren, Ausheizen und Füllen wird das Pumprohr in einem speziellen Arbeitsgang zugequetscht, so daß eine Kaltverschweißung entsteht, und der überstehende Rest des Pumpstengels abgetrennt.

Die Aufgabe, die der vorliegenden Erfindung zugrundeliegt, besteht in der Ausgestaltung eines Lasers gemäß dem Oberbegriff, die eine gleichzeitige Behandlung einer größeren Zahl von Lasern bei den Arbeitsgängen Evakuieren, Ausheizen und Füllen ermöglicht und das arbeitsaufwendige Anflanschen einspart. Diese Aufgabe wird durch die kennzeichnenden Merkmale des Patentanspruchs 1 gelöst. Ein Verschluß durch Weichlot läßt sich im vakuumdichten Gefäß durchführen, so daß der vor dem Verlöten über den Pumpkanal mit der Umgebung verbundene Innenraum des Lasers durch Evakuieren und Füllen des Gefäßes evakuiert und gefüllt werden kann.

Eine denkbare Methode, eine nicht lötfähige Metallkappe des Lasers weichlotfähig zu machen, indem sie mit einem für Weichlot benetzbaren Metall überzogen wird, würde in der Regel dazu führen, daß dieses Metall unkontrolliert auch die späteren Anglasflächen der Kappe überziehen würde. Dies stört die Haftfähigkeit des Glases an dem speziellen, an den Temperaturkoeffizienten des Glases angepaßten Material der Kappe, welche üblicherweise aus einer Nickel-Eisen-Kobalt-Legierung besteht, beispielsweise aus dem unter dem Firmennamen "Vacon" erhältlichen Material. Für eine Metallkappe aus Vacon empfiehlt sich für den Ring die Verwendung von Kupfer, wobei dieser Ring dann vorteilhaft mittels Hartlot mit der Kappe verlötet ist. Es empfiehlt sich, diesen Ring in Form eines Hohlnietes zu gestalten, welcher in eine Ausnehmung einer Metallkappe hart eingelötet ist. Die Erfindung läßt sich auch für Pumpkanäle in Keramikwänden eines Lasers einsetzen.

Bei einem relativ großen Durchmesser des Pumpkanals empfiehlt es sich, in den Ring einen Stöpsel aus weichlotfähigem Material, insbesondere Kupfer, einzulöten.

Zur Herstellung der vorgeschlagenen Laser empfiehlt es sich, daß zunächst der Ring mit der Gehäusewand bzw. der Metallkappe verlötet wird, daß dieser in einem Vakuumgefäß nach oben offen positioniert wird, daß ein Lötring und ggf. ein Stöpsel derart eingelegt werden, daß Spalte für einen Gasdurchtritt erhalten bleiben, daß mehrere Laser in ein Vakuumgefäß eingebracht und daß dieses evakuiert, ausgeheizt und gefüllt wird und daß zum Verschließen der Laser lediglich die Temperatur des Vakuumgefäßes auf die Löttemperatur angehoben wird. Dabei ist es zweckmäßig, wenn der Stöpsel schon vor dem Verlöten bis in den Pumpkanal hineinreicht und so sich selbst und den Lotring in der richtigen Position hält. Beim Erweichen des Lotes sackt dann der Stöpsel ab und bildet einen vakuumdichten Abschluß des Pumpkanals.

Die Erfindung wird nun anhand von drei Figuren näher erläutert. Sie ist nicht auf die in den Figuren gezeigten Beispiele beschränkt.

FIG 1      zeigt einen erfindungsgemäß zu verschließenden Laser in teilweise geschnittener und gebrochener Ansicht. Die

FIG 2 und 3      zeigen weitere Ausführungsformen des später vakuumdichten Abschlußes des Pumpkanals vor dem Lotaufschmelzen.

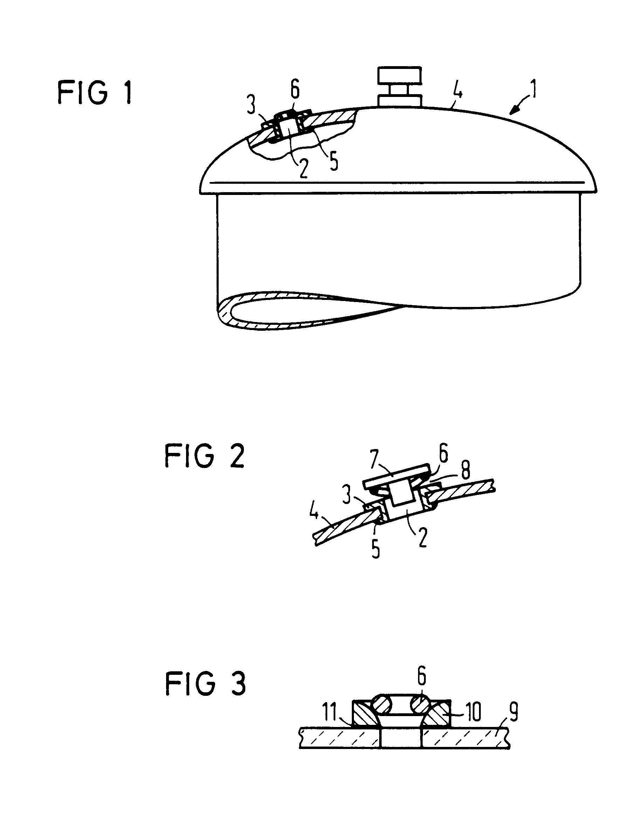

Ein Laser 1 enthält einen Pumpkanal 2, der durch einen in eine Ausnehmung in einer Metallkappe 4 des Lasers eingesetzten Ring 3 gebildet ist. Der Ring 3 aus lötfähigem Material ist über die Lotnaht 5 mittels Hartlot vakuumdicht mit der Metallkappe 4 verbunden. Die Metallkappe 4 besteht aus einer Nickel-Kobalt-Eisen-Legierung, beispielsweise aus dem Werkstoff mit der Firmenbezeichnung "Vacon". Auf den Ring 3 ist ein Lotring 6 aufgelegt. Er läßt eine Öffnung für den Durchtritt von Gas aus dem und in den Laser frei. Beim Erhitzen auf Löttemperatur schmilzt der Lotring 6, das Lot fließt in den Pumpkanal 2 und verschließt diesen vakuumdicht. In FIG 2 ist zusätzlich in den Lotring 6 ein Stöpsel 7 aus lötfähigem Material, beispielsweise Kupfer, eingesetzt. Dabei ist der Lotring 6 wellig oder profiliert gestaltet, so daß Luftspalte 8 freibleiben, durch die Gas in den Laser eindringen oder herausgepumpt werden kann. Beim Erhitzen auf Löttemperatur rutscht der Stöpsel 7 mit dem schmelzenden Lot in den Pumpkanal 2 und dichtet diesen vakuumdicht ab.

In FIG 3 ist eine ebene Gehäusewand 9 aus Keramik lötfähig gemacht und mittels Hartlotes 11 mit einem Ring 10 aus lötfähigem Metall verbunden. Der Ring 10 hat einen mit dem Abstand von der Gehäusewand zunehmenden Innendurchmesser. Auf die so gebildete, sich erweiternde Öffnung ist ein Lotring 6 aufgelegt, der wiederum bei Erwärmung auf Löttemperatur schmilzt und den Metallring 10 vakuumdicht verschließt.

**Patentansprüche**

1. Vakuumdicht verschlossener Gaslaser mit einem Pumpkanal zum Abpumpen und Füllen des Lasers, wobei der Pumpkanal in einem nicht weichlotfähigen Material gebildet ist, **dadurch gekennzeichnet,** daß ein den Pumpkanal umschließender Ring aus einem weichlötfähigen Material mit dem Gehäuse mittels eines hochschmelzenden Lotes verlötet ist und daß der Ring mittels Weichlot vakuumdicht verschlossen ist.

2. Gaslaser nach Anspruch 1, **dadurch gekennzeichnet,** daß der Pumpkanal in eine Kappe, die aus einer FeNiCo-Legierung besteht, eingesteckt ist, daß der Ring aus Kupfer besteht und mittels Hartlot eingelötet ist.

3. Gaslaser nach einem der Ansprüche 1 oder 2, **dadurch gekennzeichnet,** daß der Ring ein Hohlniet ist, welcher in eine Ausnehmung der Metallkappe hart eingelötet ist.

4. Gaslaser nach einem der Ansprüche 1 bis 3, **dadurch gekennzeichnet,** daß in den Ring ein Stöpsel aus weichlotfähigem Material, insbesondere Kupfer, eingelötet ist.

5. Verfahren zur Herstellung eines Gaslasers nach einem der Ansprüche 1 bis 4, **dadurch gekennzeichnet,** daß zunächst der Ring mit der Gehäusewand bzw. der Metallkappe verlötet wird, daß mehrere Laser in ein Vakuumgefäß so eingesetzt werden, daß die Ringe oben liegen, daß in diese Ringe Lotringe und ggf. Stöpsel derart eingelegt werden, daß Spalte für einen Gasdurchtritt erhalten bleiben, daß das Vakuumgefäß evakuiert, ausgeheizt und gefüllt wird und daß zum Verschluß der Laser lediglich die Temperatur des Vakuumgefäßes auf die Löttemperatur angehoben wird.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 023 743   (PHILIPS)<br>* Zusammenfassung; Seite 3, Zeilen 7-17; Figur 1 *<br>– – – | 1,2 | H 01 S 3/03 |
| Y | DE-A-763 951   (NSF)<br>* Das ganze Dokument *<br>– – – | 1,2 | |
| A | US-A-3 479 442   (DETRO)<br>* Spalte 3, Zeilen 14-74; Spalte 4, letzter Absatz; Figuren 3,4,5 *<br>– – – | 1,4,5 | |
| A | GB-A-498 521   (SIEMENS)<br>* Seite 1, Zeile 106 - Seite 2, Zeile 30; Figur 1 *<br>– – – – – | 1 | |

RECHERCHIERTE SACHGEBIETE (Int. Cl.5)

H 01 S
H 01 J

Der vorliegende Recherchenbericht wurde für alle Patentansprüche erstellt

| Recherchenort | Abschlußdatum der Recherche | Prüfer |
|---|---|---|
| Den Haag | 19 März 91 | WONGEL H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------------------
& : Mitglied der gleichen Patentfamilie, übereinstimmendes Dokument